# EUROPEAN PATENT APPLICATION

(11) **EP 1 647 424 A1**
(43) Date of publication of application: **19.04.2006**
(21) Application number: 05108388.9
(22) Date of filing: 13.09.2005
(51) Int. Cl.: B60G 11/28, F16F 9/04, F16B 21/06

(54) **Air spring mount with snap-in-place attachment**

(30) Priority: 15.09.2004 US 941423
(71) Applicant: THE GOODYEAR TIRE & RUBBER COMPANY, Akron OH 44316-0001 (US)
(72) Inventor: Attinello, John Steven, Uniontown, OH 44685 (US); Ball, David Walter, Canton, OH 44718 (US); Trowbridge, Mark Guy, Stow, OH 44224 (US); Woodlee, James Edwin, Kent, OH 44240 (US)
(74) Representative: Kutsch, Bernd

(57) **Abstract**

An air spring mount (10) includes an elastomeric member (24) coupled to at least one support plate (12, 14) to define a pressurizable chamber (30). The support plate (12, 14) has a snap-in-place attachment comprising a mounting stud (16, 18) projecting perpendicularly from the plate, and three resilient fingers (32a, 32b, 32c) spaced around the periphery of the stud. Barbs (36, 38) disposed in terminal ends of the fingers are biased outwardly by the fingers to engage a mounting bracket (20, 22) to which the air spring is mounted, when the attachment is inserted through a hole (40, 42) formed in the mounting bracket.

## Description

### Field of the Invention

The present invention relates to suspension systems, and more particularly to an air spring mount usable in a suspension system.

### Background of the Invention

Air spring mounts are commonly used in the suspension systems for Class 8 trucks to mount cabs and trailers to their respective chassis. Conventional air spring mounts include a flexible elastomeric member, typically in the form of a tube or sleeve, that is crimped, swaged or otherwise secured to a support plate such that the elastomeric member and support plate create a pressurizable chamber. The chamber can be filled with pressurized air, or alternatively, air can be selectively expelled from the chamber to adjust the height and stiffness of the mount relative to a desired supported load. This tunability of air spring mounts is particularly advantageous when the loads supported by the mounts vary significantly, such as the different loadings created, for example, by empty and fully loaded trailers of Class 8 trucks.

It is known in the art to provide a snap-in-place attachment on the support plates to facilitate installation of an air spring mount in a desired application. The snap-in-place attachment typically includes resilient fingers with barbs for engaging a hole formed through a corresponding bracket provided on the vehicle. One conventional air spring mount utilizes two fingers disposed on opposite sides of a mounting stud to facilitate installation. While this type of mount is easy to install, the oppositely disposed fingers do not provide resistance to lateral loading of the mount in a direction perpendicular to the aligned fingers. Under such loading, whether dynamic or static, the air spring mount can "pop out" of the installation. Such loading may be due to misalignment of components or to an overturning moment applied to the mounted structure during aggressive maneuvering or crash conditions.

Another conventional air spring mount utilizes four fingers, with pairs of the fingers disposed on opposite sides of the mounting stud. This particular snap-in configuration requires more expensive tooling due to the increased number of fingers needed for the attachment. Moreover, the greater number of fingers on the attachment requires each finger to be smaller for a given size mounting configuration. Another drawback of conventional snap-in-place mounting attachments for air spring mounts is that control of the deflection of the fingers toward the mounting stud is typically unrestricted. The fingers simply bottom out against the stud. This can cause severe loading of the fingers and can lead to fracture or cause the mount to pop out of the mounting bracket. A need therefore exists for an air spring mount having a snap-in-place attachment that overcomes these and other drawbacks of the prior art.

### Summary of the Invention

The present invention provides an air spring mount having a snap-in-place attachment that facilitates ready installation while providing increased resistance to inadvertent detachment of the mount from a mounting plate and minimizing manufacturing costs. In one embodiment, an air spring mount according to the present invention includes at least one support plate and an elastomeric member coupled to the support plate to define a pressurizable chamber. A snap-in-place attachment is disposed on the support plate and includes a mounting stud projecting substantially perpendicularly from the support plate. Three resilient fingers project from the support plate, adjacent the mounting stud, and are spaced peripherally around the stud. The fingers have radially outwardly projecting barbs disposed on terminal ends of the fingers for engaging a mounting bracket after the stud and resilient fingers of the attachment have been inserted through a hole formed in the mounting bracket.

In another embodiment, an air spring mount of the present invention includes recesses associated with each finger. The recesses extend axially along the stud such that the fingers can be flexed within the recesses in directions toward the stud. The recesses may be defined by axially extending slots formed in the stud, or by pairs of spaced walls extending radially outwardly from the stud.

The features and objectives of the present invention will become more readily apparent from the following Detailed Description taken in conjunction with the accompanying drawings.

### Brief Description of the Drawings

The accompanying drawings illustrate embodiments of the invention and, together with a general description of the invention given above, and the detailed description given below, serve to explain the invention.
FIG. 1 is a perspective view of an exemplary air spring mount including snap-in-place attachments according to the present invention;
FIG. 2 is a cross-sectional view of the air spring mount of FIG. 1, taken along line 2-2;
FIG. 3 is a top plan view of the air spring mount of FIG. 1; and
FIG. 4 is a bottom plan view of the air spring mount of FIG. 1.

### Detailed Description

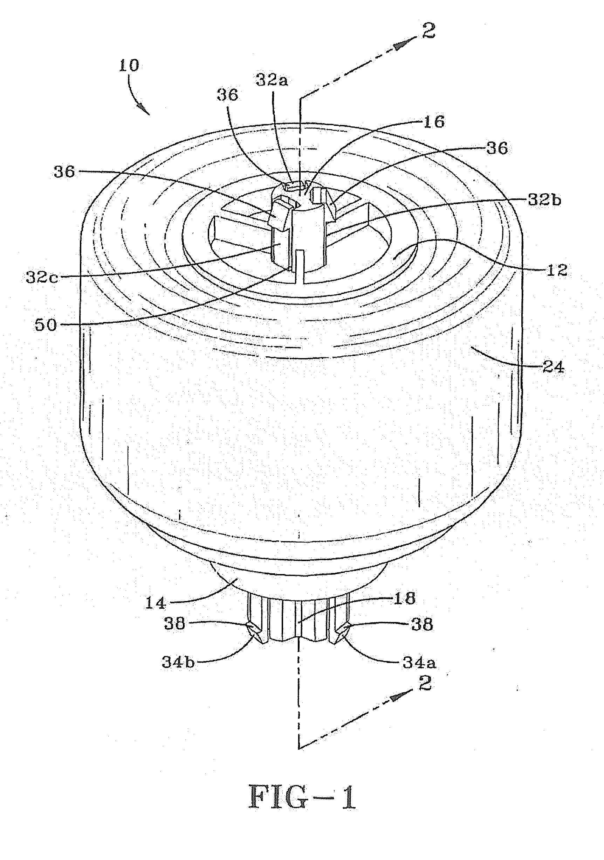

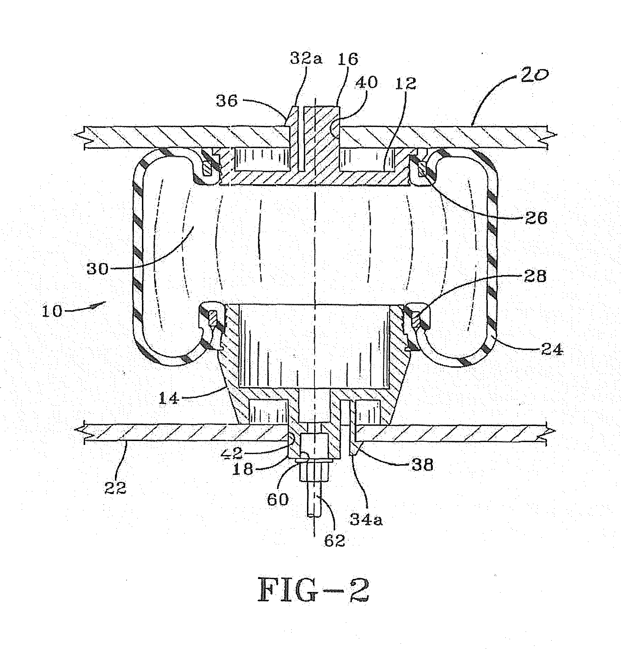

Referring now to FIGS. 1 and 2, there is shown an exemplary air spring mount 10, including upper and lower snap-in-place attachments that facilitate installation of the air spring mount 10 in an application. The air spring 10 includes upper and lower support plates 12, 14 having respective first and second mounting studs 16,18 for securing the air spring 10 to upper and lower mounting brackets 20, 22, respectively. A flexible elastomeric member 24, in the form of a cylindrical tube, is coupled at its respective ends to the upper and lower support plates 12, 14. Upper and lower rings 26, 28 are swaged to the support plates 12, 14 to crimp the ends of the elastomeric member 24 to the respective support plates 12, 14 to define a pressurizable chamber 30. While the elastomeric member 24 has been shown and described herein as having generally tubular configuration, with the ends of the tube swaged to respective support plates 12, 14 by swage rings 26, 28, it will be recognized that the elastomeric member 24 may have other configurations, and that the elastomeric member 24 may be sealingly secured to the support plates 12, 14 by crimping, clamping, molding or other methods to form the pressurizable chamber 30 of the air spring mount 10.

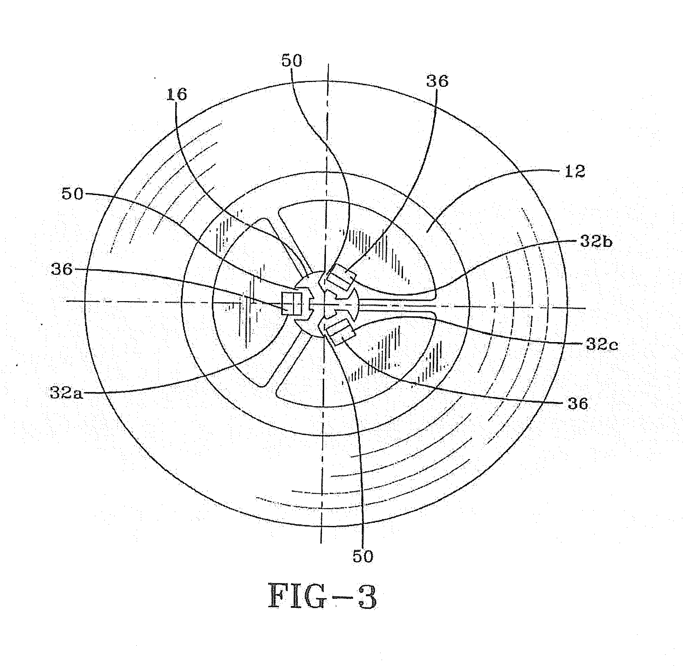

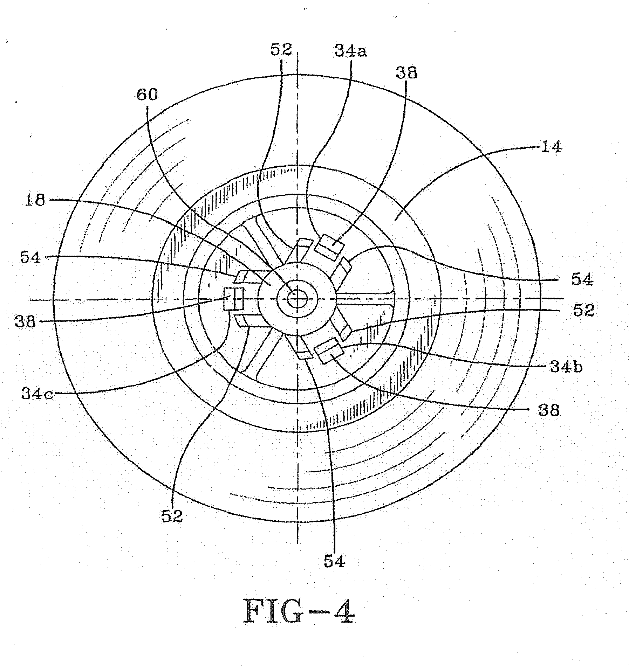

With continued reference to FIGS. 1 and 2, and referring to FIGS. 3 and 4, each of the upper and lower support plates 12, 14 further includes three resilient fingers 32a, 32b, 32c; 34a, 34b, 34c projecting substantially perpendicularly from the respective support plates 12,14 adjacent the studs 16,18 and spaced peripherally around the studs 16, 18. Tapered barbs 36, 38 are disposed on terminal ends of each resilient finger 32a, 32b, 32c; 34a, 34b, 34c whereby the resilient fingers and the mounting studs form attachments that can be inserted through holes 40, 42 formed in respective mounting brackets 20, 22. The dimensions of the holes 40, 42 are selected such that the tapered barbs 36, 38 on the ends of the fingers engage the diameters of the holes 40, 42 and cause the fingers to flex inwardly toward the studs 16, 18 as the attachments are forced through the holes. After the barbs 36, 38 have cleared the opposite side of the mounting brackets, the barbs are biased by the fingers to snap outwardly of the holes 40, 42 such that the barbs 36, 38 engage the mounting brackets 20, 22 and secure the air spring 10 to the mounting brackets 20,22.

In one embodiment, the support plates 12, 14, including the resilient fingers, are formed from polymeric material such as injection molded plastic, for example. Alternatively, the support plates may be formed as a composite construction wherein the resilient fingers are polymeric but other parts of the support plates 12, 14 are formed from metal. It will be recognized, however, that the support plates may be formed completely from metal or other materials suitable to secure the air spring 10 to the mounting brackets 20, 22.

Once the air spring mount 10 is installed, the deflection of each resilient finger 32a, 32b, 32c; 34a, 34b, 34c due to relative motion between the mounting brackets 20, 22 and the attachment is controlled by respective recesses associated with each finger and extending axially along the studs 16, 18. As shown most clearly in FIG. 3, the recesses of the attachment provided on the upper support plate 12 are defined by axially extending slots 50 formed into the mounting stud 16. As the fingers are deflected toward the stud 16 by movement of the mounting bracket 20, the fingers enter the recess and continue toward the mounting stud 16 until the perimeter of the mounting hole engages the outer surface of the mounting stud.

In another embodiment, the recesses are defined by pairs of spaced walls 52, 54 extending radially outwardly from the mounting stud 18, as depicted in FIG. 4. The upper, outside edges of the walls 52, 54 are tapered to facilitate insertion of the attachment through the hole 42 in the mounting bracket 22. An aperture 60 formed axially through stud 18, as best depicted in FIG. 2, accommodates a fitting 62 for adding air to or removing air from chamber 30. Because the three resilient fingers are spaced around the peripheries of the mounting studs 16, 18, the snap-in attachments ensure that the air spring 10 will remain secured to the mounting brackets 20, 22 regardless of the direction of lateral loads applied to the mounting brackets 20, 22.

## Claims

1. An air spring mount, comprising:
a support plate (12, 14);
an elastomeric member (24) coupled to said support plate (12, 14) and cooperating with said support plate to define a pressurizable chamber (30); and
a snap-in-place attachment disposed on said support plate,
**characterized by**:
a mounting stud (16, 18) projecting substantially perpendicularly from said support plate (12, 14);
an interlocking portion having three fingers (32a, 32b, 32c), each said finger projecting from said support plate adjacent said stud and angularly spaced from other ones of said fingers around said stud, said fingers resiliently deformable toward said stud and having respective terminal ends opposite said support plate; and
a barb (36, 38) disposed on each said resilient finger, proximate said terminal end and projecting radially outwardly relative to said stud.

2. The air spring of claim 1, wherein the interlocking portion consists of only said three fingers (32a, 32b, 32c).

3. The air spring of claim 1 or 2, wherein each of said fingers projecting from said support plate adjacent said stud is angularly spaced from other ones of said fingers by 120 degrees or approximately 120 degrees.

4. The air spring mount of at least one of the previous claims, further comprising a recess associated with each said finger, each said recess extending axially along said stud, said fingers flexurally movable toward said stud within said recess.

5. The air spring mount of claim 4, wherein each said recess is defined by an axially extending slot (50) formed in said stud.

6. The air spring mount of claim 4 or 5, wherein each said recess is defined by a pair of peripherally spaced walls (52, 54) extending radially outwardly from said stud.
